# EUROPEAN PATENT APPLICATION

(11) **EP 3 859 616 A1**
(43) Date of publication of application: **04.08.2021**
(21) Application number: 21153630.5
(22) Date of filing: 27.01.2021
(51) Int. Cl.: G06Q 10/02, G06Q 10/06

(54) **CHANGING OR BATHROOM FACILITIES FOR DISABLED AND ELDERLY PEOPLE**

(30) Priority: 30.01.2020 DK PA202070058
(71) Applicant: PRESSALIT A/S, 8680 Ry (DK)
(72) Inventor: LETH, Angela, 8660 Skanderborg (DK)
(74) Representative: Patrade A/S

(57) **Abstract**

The present invention relates to changing/bathroom facilities for disabled and elderly people. The object of the present invention is to provide a changing/bathroom facilities and a method for the people with complex disabilities to be able to find a suitable full functional changing/bathroom facilities in short time. The present invention addresses this by providing a computer-implemented method for using a computer program related to a changing place, where said computer program includes following acts, when executing said computer program by a computer:
a) identifying a location parameter on said at least one changing place, linking an identification parameter of said changing/bathroom facilities to said location parameter, storing the location parameter and identification parameter of said changing/bathroom facilities in an ID dataset in at least one readable storage medium,
b) monitoring at least one condition of said changing place, storing said condition parameter in a condition dataset in said readable storage medium,
c) retrieving the ID dataset and the condition dataset using at least one user interface, where said user interface is in data communication with said computer program running on the computer,
where at least one user is capable of determining said location and said conditions of the changing place, using the user interface, when retrieving the ID dataset and the condition dataset from said readable storage medium.

## Description

### Field of the Invention

The present invention relates to changing/bathroom facilities for disabled and elderly people.

### Background of the Invention

Changing Places toilets are in addition to standard accessible toilets. Standard accessible toilets may meet the needs of some disabled and elderly people, but there are thousands of people with complex disabilities, where the standard accessible toilets do not meet the needs. For example, people who cannot come out of their wheelchair by themselves, who need personal assistance to use the toilet or change continence pads. Furthermore, people with profound and multiple learning disabilities, spinal injuries and people living with strokes etc.

Without appropriate facilities, people with complex disabilities and their carers are forced to change continence pads on public toilet floors which are often unhygienic and undignified. Alternately, people with complex disabilities and their carers have to wait until they come home which is not always an option.

Some changing facilities are currently available, for example in some major shopping centers, airports, train stations and town centers, but they do not meet the demand.

Existing changing facilities are very expensive to maintain and often held in unacceptable conditions. The changing/bathroom facilities having the right access time, at a nearby location, and where the changing/bathroom facilities comprise the needed facilities may be difficult to find. When people with complex disabilities actually manage to find a changing place, the place may be locked, broken and/or very unhygienic due to the lack of maintenance. These people may not have the time to find alternative changing facilities due to the long distances between the existing changing/bathroom facilities.

Due to the absence of suitable changing facilities, people with complex disabilities cannot take part in activities such as shopping, going out for a meal or attending a sporting event. Without a suitable changing bench and hoist, many people with complex disabilities have to be laid on unhygienic floors or become trapped in their own homes.

### Object of the Invention

The object of the present invention is to provide a changing/bathroom facilities and a method for the people with complex disabilities to be able to find a suitable full functional changing/bathroom facilities in short time. It is the object to provide a method, so the user is capable to locate a useful changing/bathroom facilities within due time, and at the same time reduce the maintenance costs.

### Description of the Invention

The present invention addresses this by providing a computer-implemented method for using a computer program related to a changing place, where said computer program includes following acts, when executing said computer program by a computer:
a) identifying a location parameter on said at least one changing place, linking an identification parameter of said changing/bathroom facilities to said location parameter, storing the location parameter and identification parameter of said changing/bathroom facilities in an ID dataset in at least one readable storage medium,
b) monitoring at least one condition of said changing place, storing said condition parameter in a condition dataset in said readable storage medium,
c) retrieving the ID dataset and the condition dataset using at least one user interface, where said user interface is in data communication with said computer program running on the computer,
where at least one user is capable of determining said location and said conditions of the changing place, using the user interface, when retrieving the ID dataset and the condition dataset from said readable storage medium and where the method further comprises an act of controlling one or more devices in and/or at said changing place, using said user interface, where in use said user is capable of controlling said device in and/or at said changing place.

Changing/bathroom facilities are toilets in addition to standard accessible toilets. People with profound and multiple learning disabilities, as well as people with other physical disabilities such as spinal injuries, muscular dystrophy and multiple sclerosis often need extra equipment and space to allow them to use the toilets safely and comfortably. When providing changing/bathroom facilities accessible for the people with complex disabilities they can take part in activities, such as shopping, going out for a meal or attending a sporting event. With a suitable toilet, changing bench and/or hoist in reach, the people with complex disabilities are able to have a high quality of life and less problems when leaving their homes. This may indeed benefit the user of the changing/bathroom facilities and their families.

Basic requirements of a changing/bathroom facilities for the user are based on the special need of the user. For example, adequate space available for the person with complex disabilities, the carer's and the aids is one of the issues. It is well known that standard accessible toilets do not provide adequate space for people with complex disabilities. The adequate space for a user or users is preferably at least 12m², e.g. 3m x 4m. The interior of the changing/bathroom facilities may comprise an adult sized, height adjustable changing bench, wall mounted or free standing, a ceiling tracking or a mobile hoist, a peninsular (centrally placed) toilet, a privacy screen or curtain, a large bin for pads, an emergency alarm, a paper roll and a non-slip floor.

This invention provides changing facilities ('Changing Places') and a computer application enabling users to find and utilise the aforementioned Changing Places. The computer program is intended to provide useful information for the users. If the user is going on a journey, the user may take into consideration the nearest Changing/bathroom facilities in relation to their route. The user can access the program using a smartphone, a pad or any other Internet enabled device and retrieve information relating to the interior and/or condition of all registered Changing Places. Information may include, for example, the distance to the Changing Place, the availability of a given Changing Place, the availability of an adjustable changing bench etc. More information and functionality will be provided as the invention is developed and as IOT technologies develop.

A computer may also be installed in a Changing Place, allowing data communication with one or more readable storage media. One of the readable storage media has ID dataset stored. The ID dataset consists, amongst other things, of a Changing Place identifier giving the Changing Place's location. The Changing/bathroom facilities identifier may be pre-programed or automatically generated on-site when the computer program is initially activated. The computer program will also be in data communication with external devices such as global positioning systems, retrieving location information. The identifier and location coordinates will be stored in readable storage media.

The changing/bathroom facilities are monitored and information relating to the use of the changing/bathroom facilities may be made available to users. The changing/bathroom facilities may be occupied, and the user may have to find an alternative solution. The user may retrieve the information before wasting time going to the changing place. The user may also retrieve information regarding maintenance. The changing/bathroom facilities may be closed for a period of time due to cleaning and/or reparation. The condition of any given changing/bathroom facilities will be stored in the condition dataset on readable storage media available for users to retrieve.

The user may retrieve the ID dataset, the condition dataset and any other datasets relevant to the status of a given changing place. The user may use a personal device with a suitable user interface. The user interface may be in indirect data communication with the computer program running on the computer within a given changing place. The user may have access to entire or partial datasets depending on their role, requirements and availability of data.

Due to the risk of vandalism on public facilities, the Changing/bathroom facilities may be closed by default in order to prevent damage to the facilities. By controlling access via the computer program, no unauthorized person can enter the Changing Place. People with complex disabilities and/or the carers of these people will apply to a governing body for access clearance to the Changing/bathroom facilities. Access approval may be incorporated into the user interface. Furthermore, restricted access will also improve and maintain the hygienic standard as only a limited number of users will have access to the facilities.

At least within the meaning of this description the term "devices" shall be understood as meaning various installations, apparatus arranged in and/or around a changing place such as, but not limited to for example door locks, door opening mechanism, control elevation of WC, handwash basin, position of various supports, seats etc. when available. Also, air condition, lights, temperature etc. may also be construed within the meaning of devices to the extend that such devices are provided with the changing place in question.

A user with approved access will be capable of controlling the locking mechanism to the Changing/bathroom facilities entrance door and thereby gain access to the changing place. Once the user has entered, the user can lock the entrance door. The user may be capable of controlling further devices in the Changing/bathroom facilities using the user interface, for example, controlling the adjustable changing bench, the adjustable toilet, and the adjustable ceiling tracking and/or hoist etc. When the user leaves the changing place, the entrance door may lock automatically.

In a further advantageous method of the invention, said computer program is in data communication with at least one first user interface, where the first user interface has a User Access Rank to said condition dataset, where the user has a partially access to the condition dataset.

The User Access Rank is a level for which the user has access. The condition dataset may be a variable parameter. The user comprising the User Access Rank may change the condition dataset. For example when the user enters the changing place, the condition parameter will change and the condition dataset will be stored on the readable storage medium, where the dataset will comprise the information that the changing/bathroom facilities are occupied. When the user leaves the changing place, the condition parameter will change again and the condition dataset will be stored on the readable storage medium, where the dataset will comprise the information that the changing/bathroom facilities are available.

If the user finds a specific device broken, missing or otherwise damaged, the user can provide information regarding this via the user interface. This information will be stored in the condition dataset. The next user will then automatically receive the information when searching for a suitable Changing Place.

In a still further advantageous method of the invention, said computer program is in data communication with at least one service user interface, where the service user interface has a Service Access Rank to said ID dataset and said condition dataset, where the service crew has fully access to the condition dataset.

The Service User role is a level whereby only service crews will have access. The service crew may have full access to change the identification parameter and the location parameter. For example, when the Changing/bathroom facilities are new, the Changing/bathroom facilities may receive an identification number or tag, which may be defined in an identification parameter. The Changing/bathroom facilities may then be moved or scheduled to be moved to a predefined location. The ID dataset may then comprise the identification parameter and location parameter. The location parameter may be a constant parameter, as long as the Changing/bathroom facilities are staying at the same location. The ID dataset comprising the location parameter cannot be altered by the user, only by the service crew comprising the Service User role.

One or more condition parameters could consist of information which may help in maintaining the Changing Place. Cleaning and repairs could be planned ahead, thereby reducing maintenance costs. When Changing/bathroom facilities have been used by a predefined number of users, the Changing/bathroom facilities will be cleaned. Also, users may by means of the app indicate that cleaning may be needed. Every time a user uses a Changing Place, information will be saved in the condition dataset. Some Changing/bathroom facilities may be visited more frequently than others and these 'high usage' Changing/bathroom facilities will need to be cleaned more frequently than others. The availability of the condition dataset will allow maintenance crews to allocate their resources according to need and usage and therefore optimize costs.

A given Changing/bathroom facilities may, from time to time, need ad-hoc maintenance when devices or parts of devices break down. The user or the devices themselves can inform the service crew of what type of error has been detected and when the errors occurred using the user interface. The service crew then saves a lot of time as they no longer need to go from one Changing/bathroom facilities to another in order to check if the Changing/bathroom facilities and the devices inside are fully functional. This will have a big impact in terms of maintenance cost reduction. Service crews can repair broken devices more rapidly and Changing/bathroom facilities will be operational again more quickly.

The service crew may also provide information to the condition dataset regarding scheduled maintenance and/or the time when the maintenance was performed. The user may then see when the Changing/bathroom facilities were last cleaned.

In a further advantageous method of the invention, said user interface is in wireless data communication with said computer program.

The user interface may be in wireless data communication with the computer program. The part of the computer program may be executed on an external computer, using an external readable storage device. The storage device may comprise information regarding a plurality of changing/bathroom facilities. The computer may be a server installation or part of a server installation.

When the user accesses the interface and the user is looking for the nearest suitable changing place, the user accesses the external computer. The computer program provides the user with an overview, where the user may find the nearest suitable changing place. When the user has chosen the changing/bathroom facilities to use, the computer program may even provide information in form of a map, directing the user to the nearest suitable changing place.

The changing/bathroom facilities are then accessed from the user's own device, for example a smartphone or from a pad. The pad may be integrated into the user's aids, e.g. a wheelchair or a walker.

Changing/bathroom facilities processing system comprising:
- at least one computer having a computer program executed by said computer
- at least one readable storage medium, for storing at least one ID dataset and at least one condition dataset,
- at least one user interface in data communication with said changing/bathroom facilities operating system, where said user is capable of monitoring said changing place.

A computer provided in the changing/bathroom facilities having a computer program executed by the computer, may preferably comprise at least one readable storage medium. The readable storage medium is capable of storing at least one ID dataset and at least one condition dataset related to the changing place. The user interface which is in data communication with the computer program related to the changing/bathroom facilities operating system is capable of monitoring the status of the changing place. The user interface which is in data communication with the computer program related to the changing/bathroom facilities operating system is also capable of controlling the devices in the changing place.

In an advantageous embodiment of the invention, said user interface is a graphical user interface accessible on a mobile device, where the mobile device is in data communication with said computer program.

The mobile unit may be a smart phone or a Pad. The user interface is preferably a graphical user interface, GUI, which allows users to interact with the computer program controlling the devices related to the changing place. It is possible for the user to retrieve information related to the changing/bathroom facilities through graphical icons and audio tools. The graphical user interface is provided on the screen. The GUI may preferably be divided into at least one graphical element; for example in this example the GUI comprises a Map/List shift bottom 22, where the bottom may switch between a map overview and a list overview of changing/bathroom facilities. The GUI provides the user a perfect overview over the functions of the user interface. The user may preferably apply personal settings, which comply with the disability of the user.

In a further advantageous embodiment of the invention, said computer program is in data communication with at least one readable storage medium, where the ID dataset and the condition dataset are stored in said readable storage medium, where said ID dataset comprises an identification parameter and a location parameter, and said condition dataset comprises at least one of the following functions: door key on/off, device operation, emergency alarm, up/down direction, left/right direction, facilities, error and/or lacks on devices in the changing place, availability and accessibility.

Basic requirements of the user using a changing/bathroom facilities are based on the special need of the user. First of all, adequate working space must be provided in the changing place, so the person with complex disabilities, the carers and/or the aids may easily be moved around inside the changing place. The interior of the changing/bathroom facilities may preferably comprise an adult sized, height adjustable changing bench, a ceiling tracking or a mobile hoist, an adjustable toilet preferably with optional adjustable armrest, and an adjustable wash basin. The toilet with optional armrest, the wash basin and the changing bench may also comprise means for moving sideward. All the devices inside the changing facility/bathroom may be controlled and set according to the specific user, this also includes lighting and possibly sounds/music.

The user's mobile unit may retrieve ID dataset and condition dataset, which are stored in the readable storage medium. The user may use the mobile unit when controlling the functions available in the changing place. The user and/or carers may alternatively control the functions of the devices manually if preferred.

Furthermore, the changing/bathroom facilities are provided with an entrance door with releasable locking means. The functions opening/closing of the entrance door may be automatically operated by means of mobile unit. The releasable locking means may also be automatically operated by means of mobile unit or a push button arranged inside and/or outside the changing/bathroom facilities in a reachable height from the ground.

In a still further advantageous embodiment of the invention, a readable storage medium is an external readable storage medium, such as a cloud storage medium.

The user interface may be in data communication with a cloud based solution using cloud computing. The cloud based solution provides an availability of computer system resources, especially data storage and computing power. The cloud based solution is storing information regarding the user, service crew, Access Rank, changing/bathroom facilities ID dataset, condition dataset, service activities, statistics, map information etc. The user interface may be in wireless data communication with the cloud based solution using one of following protocols: GSM, UMTS, CDMA, OFDMA or an alternative similar protocol. The user interface may alternatively be in wired data communication with the cloud based solution from a stationary personal computer. The user interface is capable of being in data communication with the computer program related to controlling the devices in a specific changing place. The computer program comprises acts capable of controlling the function of one or more devices in and/or at the changing place. The user is able to easily operate the devices through the GUI via the cloud based solution.

In an embodiment of the invention the changing/bathroom facilities comprises a changing/bathroom facilities processing system, where the computer program includes following acts, when executing said computer program by the computer.

A computer may be arranged inside the changing/bathroom facilities and another computer or virtual computer may be provided in the cloud-based solution. The computer program provides a list of instructions that tell a computer what to do. Everything a computer does is done by using the computer program related to the changing/bathroom facilities and the functions needed by the user and the carers.

In an advantageous embodiment of the invention, said changing/bathroom facilities is a moveable changing/bathroom facilities comprising releasable attachment means.

The exterior of a changing/bathroom facilities may preferably comprise attachment means, so it is possible to move the changing/bathroom facilities to another location if needed. The changing/bathroom facilities may comprise releasable attachment means in or at the roof and/or on the sides of the changing place. The changing/bathroom facilities is capable of being moved/hoisted by hooking on to the attachment means, for example using one or more hooks and wires/robes. The changing/bathroom facilities may then be lifted by using a crane. The changing/bathroom facilities is then easily loaded and/or unloaded to and from a truck. When the changing/bathroom facilities is safely placed in another location, the computer in the changing/bathroom facilities is restarted and initializing the ID dataset with the location parameter, according to the new location.

In a further advantageous embodiment of the invention, said changing/bathroom facilities comprises energy generating means, such as solar cells.

Solar cells may be arranged on the roof and/or on the sides of the changing place. The solar cells and batteries may easily accumulate the amount of energy needed to supply power to drive the facility related to the changing place, such as the computer, the moveable devices and light sources inside and/or outside the changing place. Further it is contemplated to collect rain water by means on the roof of the changing bathroom/facility, where said water may in uncleaned mode be used for flushing etc, and if cleaned (for example by means of a biological solar powered installation) also used for normal use in the facility. Likewise wastewater may also be processed by a cleaning facility integrated in the changing facility/bathroom.

Readable storage medium comprising instructions which when executed by a computer, causes the computer to carry out the acts.

The readable storage medium comprising instructions when executing the computer program by a computer causes the computer to:
Carry out the act of identifying a location parameter on said at least one changing place. Linking an identification parameter of said changing/bathroom facilities to said location parameter. Storing the location parameter and identification parameter of said changing/bathroom facilities in an ID dataset in at least one readable storage medium.
Carry out the act of monitoring at least one condition of said changing place. Storing said condition parameter in a condition dataset in said readable storage medium.
Carry out the act of retrieving the ID dataset and the condition dataset using at least one user interface, where said user interface is in data communication with said computer program running on the computer.
Carry out the act of controlling one or more devices in and/or at said changing place, using said user interface, where in use said user is capable of controlling said device in and/or at said changing place.

In an advantageous embodiment of the invention, said readable storage medium is located in said changing place. Alternatively, or in combination with a further advantageous embodiment of the invention, said readable storage medium is provided as a cloud storage medium.

The invention has now been explained with reference to a few embodiments which have only been discussed in order to illustrate the many possibilities and varying design possibilities achievable according to the present invention.

### Description of the Drawing

The invention is described in the following with reference to:
Fig. 1a,b: Illustrating an interior of a changing place.
Fig. 2: Illustrating an interior of a changing/bathroom facilities provided with at service room.
Fig. 3a,b: Illustrating an exterior of a changing/bathroom facilities comprising attachment means.
Fig. 4a,b: Showing a user interface as an application on a mobile unit.
Fig. 5: Illustrating data communication between a changing/bathroom facilities and a user interface.
Fig. 6: Illustrating data communication between a cloud based solution, a changing/bathroom facilities and a user interface.
Fig. 7: Illustrating data communication between a cloud based solution, a changing/bathroom facilities and plurality of user interfaces.

### Detailed Description of the Invention

Few embodiments of the invention are explained in the following detailed description. It is to be understood that the invention is not limited in its scope to the following description or illustrated in the drawings. The invention is capable of other embodiments and of being practiced or carried out in various ways. Another safety precaution for the user may be the emergency alarm. The user may be in a situation which requires extra help or medical assistance. The user may then activate an emergency alarm, and call for help.

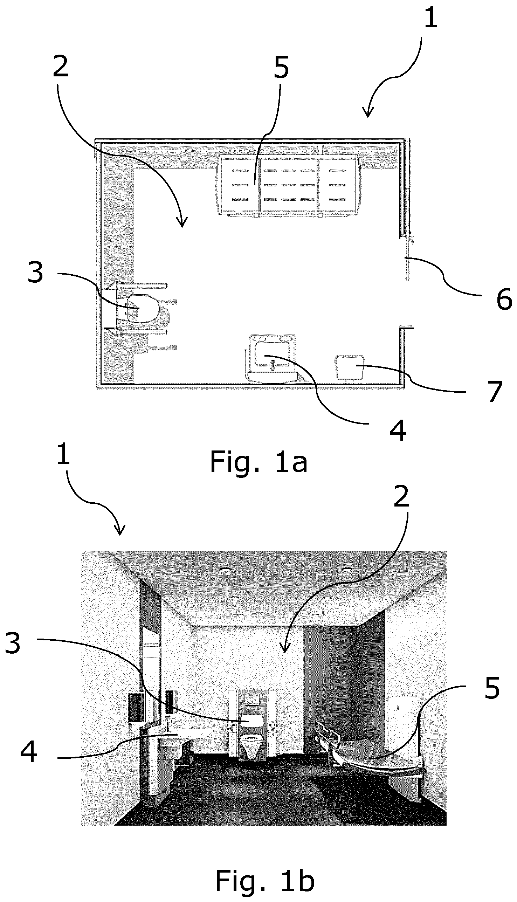

Fig. 1a and fig. 1b illustrates an interior of a changing/bathroom facilities1. Basic requirements of a changing/bathroom facilities1 are based on the special need of the user, where the user may be a person with complex disabilities. For example, adequate space 2 available for the person with complex disabilities, the carers and the aids is one of the issues. The adequate space 2 for a user or users is preferably more than 12m², e.g. 3m x 4m. The interior of the changing/bathroom facilities1 may comprise an adult sized, height adjustable changing bench 5, in this example the adjustable changing bench 5 is wall mounted. Preferably also a ceiling tracking or a mobile hoist, but this is not shown on the fig. 1 a and fig. 1 b. An adjustable toilet 3 with optional armrest and an adjustable wash basin 4 are also provided, and may by adjustable in height and sideways. An emergency alarm may be placed in the room, not shown on the fig. 1 a and fig. 1 b. The toilet 3 with optional armrest, the wash basin 4 and the changing bench 5 may also comprise means for moving sideward. A trashcan 7 is also provided in the changing/bathroom facilities1. An emergency alarm may be placed in the room, not shown on the fig. 1 a and fig. 1 b. Furthermore, the changing/bathroom facilities1 is provided with a sliding entrance door 6 with releasable locking means. The sliding entrance door 6 may be automatically operated by means of a remote control, and the releasable locking means may also be automatically operated by means of a remote control. The remote control may be controlled by the user using a user interface, which may be operating on a personal device.

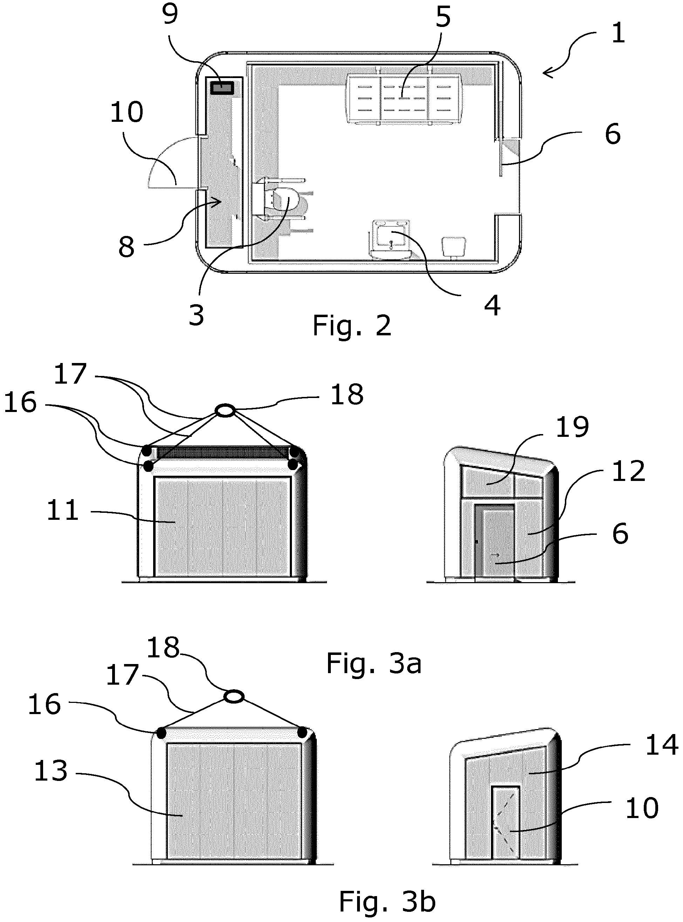

Fig. 2 illustrates an interior of a changing/bathroom facilities1 provided with at service room 8. The service room 8 is accessible for the service crew. The service crew has access to all installations regarding the changing/bathroom facilities1. A computer is provided in the service room 8. A computer program, which is executed by the computer 9, and a readable storage memory are arranged in the changing/bathroom facilities1. The computer program and the readable storage memory are accessible from a user interface, using wired or wireless data communication. The computer program is related to the operation of the changing/bathroom facilities1.

The computer program comprises following acts: identifying the changing/bathroom facilities1, monitoring and controlling the operation of the changing/bathroom facilities1. Furthermore, the computer program may be in direct data communication with the user interface. A readable storage medium may also be integrated in the changing place, or the readable storage medium may also be an external unit or cloud based solution. The computer program identifies a location parameter, which defines the location of the changing/bathroom facilities1. The location parameter is then linked to an identification parameter of the changing/bathroom facilities1. The location parameter and identification parameter of said changing/bathroom facilities are stored in an ID dataset on the readable storage medium. Now the changing/bathroom facilities are ready to be searched. It is possible for the user to find the changing place, when using the user interface.

The computer program is capable of monitoring one or more conditions of the changing/bathroom facilities1. For example, the open and close function of the entrance door 6 and the service door 10. And the lock and unlocking function of the entrance door 6 and the service door 10. Furthermore, the computer program is capable of monitoring the use of electricity and water. The condition dataset or condition datasets are stored in the readable storage medium.

The user interface is in wireless data communication with said computer program executed on an external computer, for example, a cloud-based solution. The cloud-based solution is in data communication with the computer program executed on the computer in the changing/bathroom facilities1. The user is capable of retrieving the ID dataset and the condition dataset from the cloud based solution by using the user interface.

When the user enters the changing/bathroom facilities1, the user interface may then be in wired or wireless data communication with the computer program executed on the computer in the changing/bathroom facilities1. The user is then capable of controlling the devices in or at the changing/bathroom facilities by using the user interface.

The computer program controls one or more devices in the interior of the changing/bathroom facilities1. For example, the adjustment and movement of the toilet 3, armrest, the wash basin 4 and/or the changing bench 5. The adjustment and movement of the devices is performed according to the user's needs, where the user is capable of controlling the device in changing/bathroom facilities by the use of the user interface.

Fig. 3a and fig. 3b illustrate an exterior of a changing/bathroom facilities comprising attachment means.

Fig. 3a shows the exterior of a changing/bathroom facilities from a first side 11 and the front side 12. The entrance door 6 is provided at the front side 12. Windows may be arranged in the top of the front side 12 providing the interior with natural light during the daytime.

Solar cells 15 are arranged on the roof of the changing/bathroom facilities1, supplying power to the computer, the moveable devices and the light sources in the changing/bathroom facilities 1.

The changing/bathroom facilities 1 is a moveable changing/bathroom facilitiescomprising releasable attachment means 16 in or at the roof of the changing/bathroom facilities1. The changing/bathroom facilities1 is capable of being moved to another location by hooking on to the attachment means 16. This may easily be performed by using wires or rope 17 and hooking means 18, and by using a crane the changing/bathroom facilities1 may easily be loaded and unloaded to and from a truck.

When the changing/bathroom facilities1 is arranged at another location the computer in the changing/bathroom facilities1 is restarted and initializing the ID dataset with the new location parameter.

Fig. 3b shows the exterior of a changing/bathroom facilities from a second side 13 and the back side 14. The service door 10 is provided at the back side 14. The attachment means 16 is arranged in each corner of the roof. This may easily be performed by using wires or rope 17 and hooking means 18.

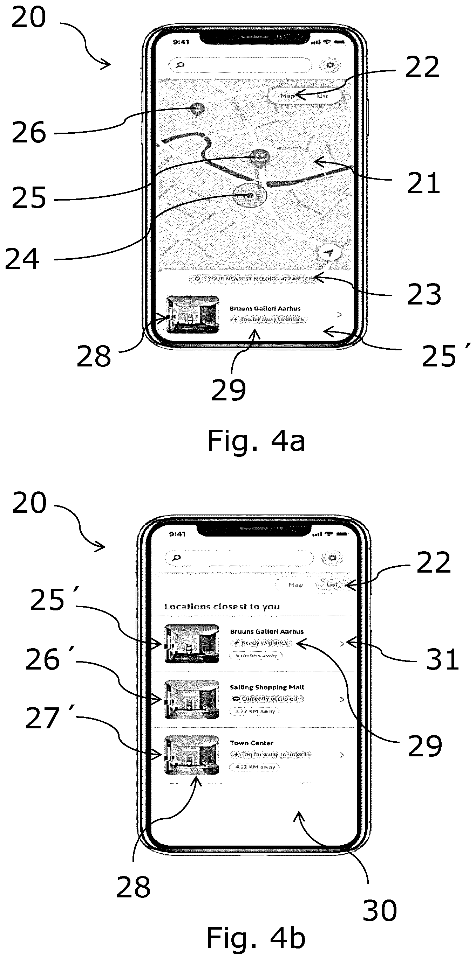

Fig. 4a and fig. 4b show a user interface 20 as an application on a mobile unit. The mobile unit may be a smart phone or a Pad. The user interface is a graphical user interface, GUI 22, and allows the user to interact with changing/bathroom facilities or retrieve information related to the changing/bathroom facilities through graphical icons and audio indicator. The graphical user interface is on the screen. The GUI is divided into at least one graphical element; for example in this example the GUI comprises a Map/List shift bottom 22, where the bottom may switch between a map overview and a list overview of changing/bathroom facilities.

If the Map/List shift bottom 22 is set to "Map" as in fig. 4a, the GUI provides a map 21 showing where the nearest changing/bathroom facilities 25, 26 are located in relation to the users location 24, a distance 23 from the users location 24 to the nearest located changing/bathroom facilities 25, and a list with one or more of the nearest changing/bathroom facilities 25'. The list may be provided with a picture 28 of the interior of the nearest located changing/bathroom facilities25', and information 29 regarding the status of the nearest located changing/bathroom facilities25', for example if the chancing place 25' is occupied or free to use.

If the Map/List shift bottom 22 is set to "List" as in fig. 4b, the GUI provides a list 30 of the nearest located changing/bathroom facilities 25', 26', 27', where the list of the changing/bathroom facilities 25', 26', 27', are determined by the rank of the nearest located changing/bathroom facilities at first. Each of the changing/bathroom facilities 25', 26', 27 is provided with a picture 28 of the interior, and information 29 regarding the status, for example the changing/bathroom facilities 25' are free to use, and the changing/bathroom facilities 26' are occupied etc. If the user chooses to go and use the nearest located changing/bathroom facilities 25', the user is provided with a GUI for controlling the changing/bathroom facilities 25' by entering the user Access Rank 31. The screen will be provided with a GUI for controlling one or more of following functions: door key on/off, device operation, such as up/down direction, left/right direction, access to emergency alarm, reporting error on devices and/or lacks and lack of articles in the changing/bathroom facilities etc. The computer program executed on a computer in the changing/bathroom facilities 25' is then in data communication with the user's mobile unit, where the user's mobile unit has a user Access Rank to read the accessible information in the condition dataset.

The service crew is provided with a substantially similar GUI comprising Map/List shift bottom 22. When the service crew is provided with information that triggers maintenance, the information will be provided for the service crew through the GUI.

The service crew is provided with a mobile unit with the GUI. The service crew goes to the nearest located changing/bathroom facilities 25' and gets access to the changing/bathroom facilities 25' using the Service Access Rank 31. The screen will be provided with a GUI for controlling one or more of following functions: door key on/off, device operation, such as up/down direction, left/right direction, access to emergency alarm, reporting error on devices and/or lacks and lack of articles in the changing/bathroom facilities etc. The computer program executed on a computer in the changing/bathroom facilities 25' is then in data communication with the service crew's mobile unit, where the service crew mobile unit has a service Access Rank to the ID dataset and the condition dataset. The condition parameter may comprise information, which may be important for the maintenance of the changing place. This information is also accessible for the service crew.

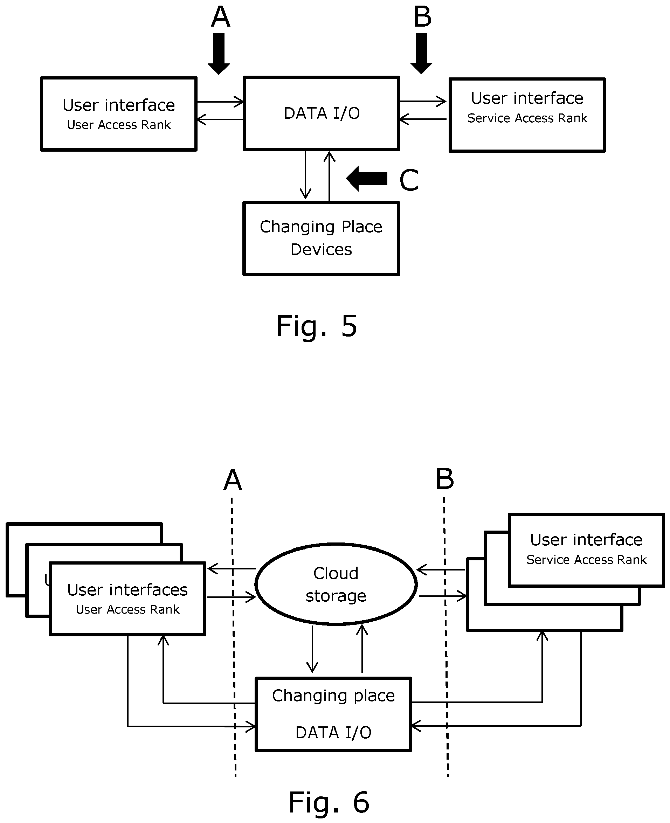

Fig. 5 illustrates the data communication between the changing/bathroom facilities and a user interface. The user interface provides data communication A for User Access Rank and/or data communication B for Service Access Rank. The user interface is in data communication with a computer program executed by a computer providing dataset in/out, DATA I/O, of the computer. The computer and at least one readable storage medium are located in the changing/bathroom facilities where the computer program controls the devices in the changing/bathroom facilities using controlling means C. The user interface is in wireless data communication with said computer program using ZigBee or Bluetooth or an alternative similar protocol.

The computer program comprises acts capable of controlling one or more devices in and/or at the changing place, using data communication A controlled by the user from the mobile unit. The user easily operates the devices through the GUI. The user interface may read the condition dataset and re-write some of the condition dataset, which is writable for a user having a User Access Rank.

The computer program also comprises acts capable of controlling one or more devices in and/or at the changing place, using data communication B controlled by the service crew, when using the mobile unit. The service crew easily operates the devices and the maintenance functions of the changing/bathroom facilities through the GUI. The user interface has full access to the ID dataset and the condition dataset, which is readable and writable for the service crew having a Service Access Rank.

Fig. 6 illustrates the data communication between the cloud-based solution, a changing/bathroom facilities and a user interface. The user interface is in data communication A for a user having User Access Rank to/and from the cloud based solution and/or the changing place. The user interface is in data communication B for the service crew having a Service Access Rank to/from the cloud based solution and/or the changing place.

The cloud based solution is storing information regarding the user, service crew, Access Rank, changing/bathroom facilities ID dataset, condition dataset, service activities, statistics, map information etc. The user interface is in wireless data communication with the cloud-based solution using one of following protocols: GSM, UMTS, CDMA, OFDMA or an alternative similar protocol. The user interface is capable of being in data communication with the computer program related to controlling the devices in a specific changing place. The computer program comprises acts capable of controlling one or more devices in and/or at the changing place, using data communication A and/or data communication B controlled by the user and/or service crew from a mobile unit through the cloud based solution. The user easily operates the devices through the GUI via the cloud-based solution.

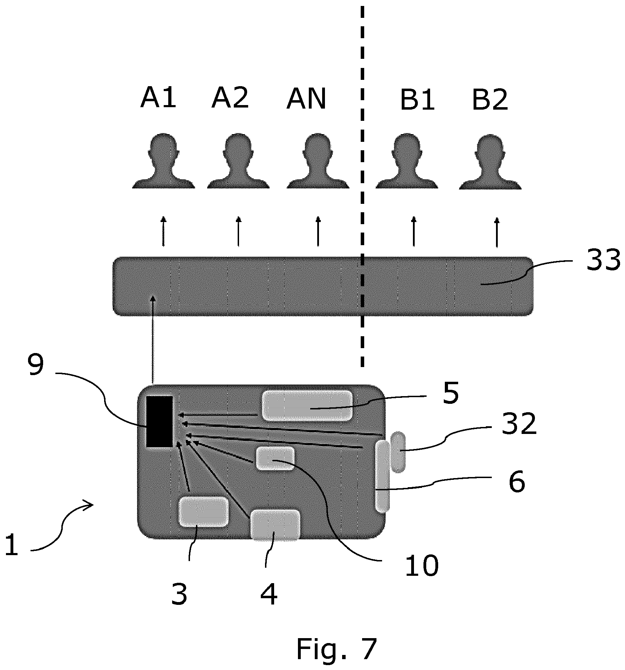

Fig. 7 illustrates the data communication between a cloud-based solution, a changing/bathroom facilities and a plurality of user interfaces. The user interfaces may be a plurality of users having A1, A2 .. AN, User Access Rank and service crew having Service Access Rank B1, B2. The user interfaces are in data communication with the cloud-based solution 33, and the user interfaces are in data communication with the changing/bathroom facilities 1 via the cloud-based solution 33. The computer program comprises following acts: identifying the changing/bathroom facilities1, monitoring and controlling the operation of the changing/bathroom facilities1.

A readable storage medium is integrated in the changing/bathroom facilities1, and another readable storage medium is provided in the cloud-based solution 33. The user controls one or more devices in the interior of the changing/bathroom facilities1. For example, the key lock/unlock function 32, the opening and closing of the door 6 and service door 10, the adjustment and movement of the toilet 3, armrest, the washbasin 4 and/or the changing bench 5. The adjustment and movement of the devices is performed according to the user's needs, where the user is capable of controlling the device in the changing/bathroom facilities1 by the use of the user interface, for example via the cloud based solution 33.

Computer-implemented method for using a computer program related to a changing/bathroom facilities1, which is explained in reference to fig. 1-7, where said computer program includes following acts, when executing said computer program by a computer 9 or in a cloud based solution 33:
a) identifying a location parameter on said at least one changing place, linking an identification parameter of said changing/bathroom facilities1 to said location parameter, storing the location parameter and identification parameter of said changing/bathroom facilities in an ID dataset in at least one readable storage medium,
b) monitoring at least one condition of said changing/bathroom facilities1, storing said condition parameter in a condition dataset in said readable storage medium,
c) retrieving the ID dataset and the condition dataset using at least one user interface 20, where said user interface 20 is in data communication with said computer program running on the computer 9 or in a cloud based solution 33,
where at least one user is capable of determining said location and said conditions of the changing/bathroom facilities 1, using the user interface 20, when retrieving the ID dataset and the condition dataset from said readable storage medium located in the changing/bathroom facilities1 and/or in the cloud based solution 33.

## Claims

1. Computer-implemented method for using a computer program related to a changing place, where said computer program executes the following procedures, when executing said computer program by a computer:
a) identifying a location parameter on said at least one changing place, linking an identification parameter of said changing place to said location parameter, storing the location parameter and identification parameter of said changing place in an ID dataset in at least one readable storage medium,
b) monitoring at least one condition of said changing place, storing said condition parameter in a condition dataset in said readable storage medium,
c) retrieving the ID dataset and the condition dataset using at least one user interface, where said user interface is in data communication with said computer program running on the computer,
where at least one user is capable of determining said location and said condition of the changing place, using the user interface, when retrieving the ID dataset and the condition dataset from said readable storage medium and where the method further comprises an act of controlling one or more devices in and/or at said changing place, using said user interface, where in use said user is capable of controlling said device in and/or at said changing place.

2. Computer-implemented method according to claim 1, where said computer program is in data communication with at least one first user interface, where the first user interface has a User Access Rank to said condition dataset, where the user has a partially access to the condition dataset.

3. Computer-implemented method according to claim 1 or 2, where said computer program is in data communication with at least one service user interface, where the service user interface has a Service Access Rank to said ID dataset and said condition dataset, where the service crew has fully access to the condition dataset.

4. Computer-implemented method according to claim 1, where said user interface is in wireless data communication with said computer program.

5. Changing/bathroom facilities processing system comprising:
- at least one computer having a computer program executed by said computer according to claim 1-4,
- at least one readable storage medium, for storing at least one ID dataset and at least on condition dataset,
- at least one user interface in data communication with said changing/bathroom facilities operating system, where said user is capable of monitoring said changing place.

6. Changing/bathroom facilities processing system according to claim 5, where said user interface is a graphical user interface accessible on a mobile device, where the mobile device is in data communication with said computer program.

7. Changing/bathroom facilities processing system according to claim 5, where said computer program is in data communication with at least one readable storage medium, where the ID dataset and the condition dataset are stored in said readable storage medium, where said ID dataset comprises an identification parameter and a location parameter, and said condition dataset comprises at least one of the following functions: door key on/off, device operation, emergency alarm, up/down direction, left/right direction, facilities, error and/or lacks on devices in the changing place, availability and accessibility.

8. Changing/bathroom facilities processing system according to claim 6, where a readable storage medium is an external readable storage medium, such as a cloud storage medium.

9. Changing/bathroom facilities comprising a changing/bathroom facilities processing system according to claim 5 to 8, where the computer program includes following acts according to claim 1-5, when executing said computer program by the computer.

10. Changing/bathroom facilities according to claim 9, where said changing/bathroom facilities is a moveable changing/bathroom facilities comprising releasable attachment means.

11. Changing/bathroom facilities according to claim 9, where said changing/bathroom facilities comprises energy generating means, such as solar cells.

12. Readable storage medium comprising instruction which when executed by a computer, causes the computer to carry out the acts of claim 1.

13. Readable storage medium according to claim 12, where said readable storage medium is located in said changing place.

14. Readable storage medium according to claim 12, where said readable storage medium is provided as a cloud storage medium.
